# FASCICULE DE BREVET EUROPEEN

(11) **EP 1 619 424 B1**
(45) Date de publication et mention de la délivrance du brevet: **25.02.2009**
(21) Numéro de dépôt: 05015273.5
(22) Date de dépôt: 14.07.2005
(51) Int. Cl.: F16J 15/08

(54) **Joint d'étanchéité comprenant une âme rigide et au moins une barrière d'étanchéité en matériau souple**
Dichtung mit hartem Tragabschnitt und kompressiblem Dichtungsabschnitt
Gasket with a rigid support layer and soft sealing barrier

(30) Priorité: 19.07.2004 FR 0451574
(43) Date de publication de la demande: 25.01.2006
(73) Titulaire: Carl Freudenberg KG, 69469 Weinheim (DE)
(72) Inventeur: Bolé, Ronan, 87000 Limoges (FR)

(56) Documents cités:
- EP-A- 1 350 992
- US-A- 4 674 756

## Description

La présente invention se rapporte à un joint d'étanchéité comprenant une âme rigide et au moins une barrière d'étanchéité en matériau souple, notamment en élastomère.

Selon un mode de réalisation connu, décrit notamment dans le document FR-2.768-211, un joint d'étanchéité peut comprendre une âme métallique revêtue sur chacune de ses faces d'une couche d'élastomère.

Selon ce document, l'âme comprend des crevés pour obtenir un meilleur accrochage des couches d'elastomère sur l'âme. Ces crevés assurent également la fonction de butée de serrage et ont une hauteur égale a la couche d'élastomère.

Par conséquent pour assurer l'étanchéité, les couches d'élastomère comprennent des filets en saillie susceptibles d'être comprimés de manière à former des barrières d'étanchéité.

Ce type de joint ne donne pas pleinement satisfaction et n'assure pas une fonction d'étanchéité optimale en raison d'un taux de compression non contrôlé du revêtement élastomère, notamment au niveau des filets, relativement faible. Cet inconvénient est d'autant plus important que la pression des fluides à étancher à l'intérieur des moteurs actuels est de plus en plus élevée.

Selon une autre variante, un joint d'étanchéité peut comprendre une âme métallique revêtue sur au moins une de ses faces d'une couche d'élastomère avec des filets en saillie susceptibles d'être comprimés et de former des barrières d'étanchéité.

Cette variante ne donne pas pleinement satisfaction car la mise en place du joint nécessite de contrôler les efforts de serrage afin que le revêtement élastomère ne soit pas excessivement comprimé et perde ses propriétés élastiques.

Selon un autre document de l'art antérieur, le document EP-1.350.992, un joint d'étanchéité peut comprendre une âme métallique comprenant une forme en relief au niveau d'une barrière d'étanchéité. La forme en relief, dont on utilise les capacités de déformation pour réaliser la barrière d'étanchéité à la manière d'un ressort, est recouverte d'un élément en matériau souple qui s'étend au delà de ladite forme en relief.

Aussi, la présente invention vise à pallier les inconvénients de l'art antérieur en proposant un nouveau joint d'étanchéité de conception simple et comprenant une barrière d'étanchéité constituée d'un élément en matériau souple, susceptible d'assurer une excellente étanchéité même à des pressions élevées et de conserver ses capacités à étancher dans le temps.

A cet effet, l'invention a pour objet un joint d'étanchéité comprenant une tôle d'épaisseur 1, revêtue sur au moins une surface d'un élément en matériau souple, notamment en élastomère, ladite tôle comprenant une butée d'épaisseur h supérieure à I et une barrière d'étanchéité constituée d'un élément en matériau souple, notamment en élastomère, rapportée sur la surface revêtue de ladite tôle et de hauteur supérieure à celle de la butée, ladite tôle comprenant une forme en relief prévue au niveau de la barrière d'étanchéité, recouverte de l'élément en matériau souple qui s'étend au delà de ladite forme en relief, caractérisé en ce que la forme en relief a une hauteur inférieure à celle de la butée.

D'autres caractéristiques et avantages ressortiront de la description qui va suivre de l'invention, description donnée à titre d'exemple uniquement, en regard des dessins annexés sur lesquels:
- la figure 1 est une coupe d'un joint non comprimé selon une variante simplifiée de l'invention,
- la figure 2 est une coupe d'un joint non comprimé selon une autre variante simplifiée,
- la figure 3 est une coupe du joint de la figure 1 disposé entre deux éléments à étancher, et
- la figure 4 est une coupe d'un joint non comprimé selon une variante améliorée.

Sur les différentes figures, on a représenté en 10 un joint d'étanchéité susceptible d'être disposé entre deux éléments 12, 12' à étancher, ledit joint comprenant au moins une ouverture 14 susceptible de coopérer avec des conduits ou ouvertures ménagés au niveau des éléments à étancher. Ainsi, le joint doit assurer une étanchéité entre les différentes ouvertures 14 et entre lesdites ouvertures et l'extérieur. Ce joint d'étanchéité peut être utilisé dans de nombreuses applications par exemple en tant que joint de culasse, joint de palier, joints pour carter de distribution ou pompe à eau, ...

Le joint 10 comprend au moins une barrière d'étanchéité 16, continue ou discontinue, disposée de manière adéquate au niveau de la surface du joint pour limiter la propagation d'un fluide. A titre d'exemple, la barrière d'étanchéité peut être prévue à une faible distance du bord périphérique du joint ou autour des ouvertures 14.

Selon l'invention, le joint 10 comprend une âme 18 d'épaisseur l avec une butée 20 d'épaisseur h supérieure à l ainsi qu'une nervure 22 prévue au niveau de la barrière d'étanchéité 16 dont la forme en relief est prévue au niveau de la face du joint comprenant la butée 20. L'âme est réalisée en un matériau suffisamment rigide, au moins au niveau de la nervure 22 qui sera profilée de manière à limiter les déformations de ladite nervure lorsqu'elle est soumise à une contrainte.

La butée 20 peut être obtenue de différentes manières par exemple par ajout de cale, par déformation de la tôle, notamment par pliage, par découpe ou autre.

La butée 20 a pour fonction de limiter l'écrasement du joint en imposant une valeur limite inférieure à l'écartement entre les éléments à étancher.

Selon un mode de réalisation préféré, l'âme est réalisée à partir d'une tôle pliée pour obtenir la butée 20 et nervurée pour obtenir la nervure 22.

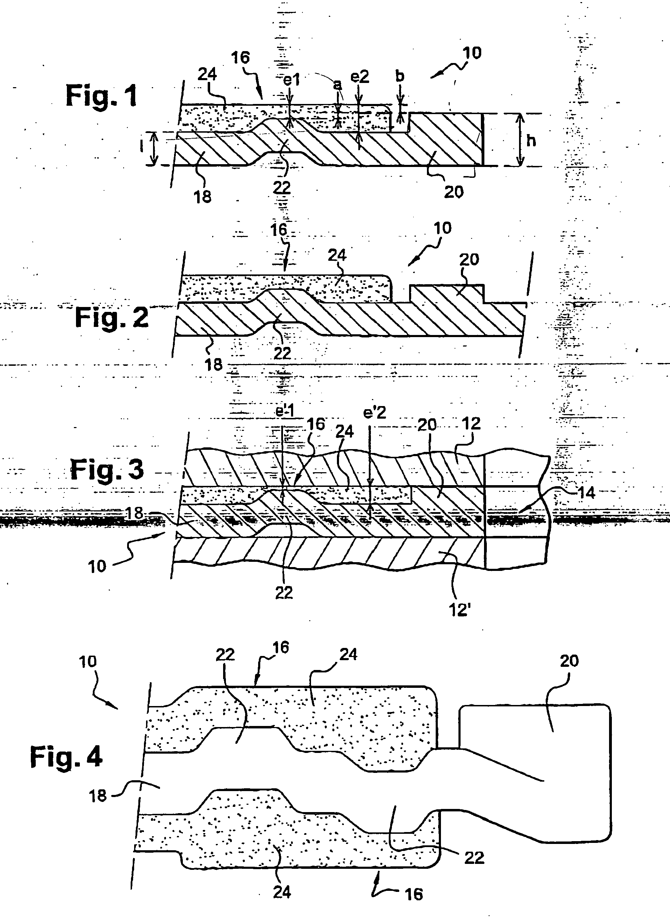

Cette butée 20 peut être disposée au niveau du bord périphérique du joint ou de l'ouverture 14, comme illustré sur les figures 1, 3 et 4, ou non, comme illustré sur la figure 2. Selon les cas, la butée 20 peut venir en saillie de chaque côté de l'âme, comme illustré sur la figure 4, ou d'un seul côté, comme illustré sur les figures 1, 2 et 3.

Selon l'invention, la partie en saillie de la nervure 22 a une hauteur inférieure à celle de la butée, la différence de hauteur étant référencée a sur la figure 1.

En complément, la barrière d'étanchéité 16 est constituée d'un élément 24 en matériau souple, notamment en élastomère, disposé au niveau de la nervure, 22, rapporté sur la face de l'âme 18 comportant la partie en saillie de la nervure et s'étendant de part et d'autre de ladite nervure 22. Ainsi, l'élément 24 a une épaisseur e1 au droit de la partie en saillie de la nervure 22 et une épaisseur e2 en dehors de cette zone.

Selon l'invention, l'élément 24 en matériau souple a une hauteur supérieure à celle de la butée, la différence de hauteur étant référencée b sur la figure 1.

Lorsque le joint 10 est comprimé entre- deux éléments à étancher 12, 12', l'élément 24 en matériau souple est comprimé entre l'âme 18 sensiblement rigide et l'un des éléments 12 à étancher. On note que la butée 20 limite l'écrasement de l'élément 24 en matériau souple et réduit les risques de détérioration de ce dernier, notamment de ses capacités élastiques dans le temps.

Lorsqu'il est comprimé, l'élément 24 a une épaisseur e1' au droit de la partie en saillie de la nervure 22 et une épaisseure e2' dehors de cette zone. Ainsi; au droit de la nervure 22, on obtient un taux de compression e1'/e1 supérieur au taux de compression e2'/e2 des zones situées en dehors de la nervure,

Cette valeur supérieure du taux de compression de l'élément en matériau souple permet de former une barrière d'étanchéité efficace au droit de la nervure 22, susceptible de résister à des pressions élevées,

Le joint de l'invention sera plus particulièrement adapté pour assurer l'étanchéité entre des éléments rigides soumis à de fortes contraintes, pour lesquels sera privilégié la résistance à la compression du joint au détriment de sa flexibilité.

Selon une variante, le joint 10 peut être revêtu d'un élément en matériau souple sur toute sa surface. Dans ce cas, le revêtement peut avoir différentes hauteurs en fonction des zones, une hauteur plus importante étant prévue au niveau de la ou des barrières d'étanchéité.

Selon une autre caractéristique de l'invention, des barrières d'étanchéité sont prévues sur chacune des faces du joint, les nervures 22 étant orientées de manière opposée, comme illustré sur la figure 4. Avantageusement, les barrières d'étanchéité des faces supérieure et inférieure seront décalées.

Selon une autre caractéristique de l'invention, la barrière d'étanchéité peut avoir une épaisseur e1 variable sur sa longueur, pour ajuster le taux de compression en fonction des efforts de serrage, généralement variable au niveau de la surface de contact du joint. Cette variation d'épaisseur e1 peut être obtenue en ajustant la hauteur de la nervure et/ou la hauteur de l'élément en matériau souple.

A titre d'exemple, l'âme est réalisée à partir d'une tôle métallique ayant des caractéristiques fonction de la force d'étanchéité requise. L'âme 18 pourra être en acier doux (traités ou non) ou dans un acier inoxydable. A titre indicatif, la résistance mécanique de l'âme sera comprise dans la plage de 500 à 1300 Mpa.

Dans les cas d'utilisation en milieu particulièrement agressif, l'âme sera avantageusement protégée par des revêtements anti-corrosion, tels qu'à base de zinc par exemple.

Le matériau souple doit avoir une bonne tenue à la température, une bonne résistance aux liquides et aux huiles de refroidissement et une déformation rémanente à la compression inférieure à 50%. A titre d'exemple, on pourra utiliser des élastomères des familles NBR, SBR, EPDM, MVQ, FPM.

L'épaisseur I de l'âme varie de l'ordre de 0,1 à 1 mm.

L'épaisseur h de la butée varie de l'ordre de 0,15 à 1,2 mm.

La différence de hauteur a entre la partie en saillie de la nervure et le plan d'appui de la butée sera supérieure ou égale à environ 30% de l'épaisseur e1 de l'élément 24.

La différence de hauteur b entre l'élément en matériau souple et le plan d'appui de la butée sera de l'ordre de 10 à 70% de l'épaisseur de e1 de l'élément 24.

Selon un mode de réalisation préféré, une tôle est pliée et nervurée de manière adéquate pour former l'âme 18. Ensuite, on injecte de l'élastomère liquide dans un moule aux formes des barrières d'étanchéité, dans lequel l'âme 18 est disposée au moins en partie. Après vulcanisation de l'élastomère, on découpe l'âme de manière à former les ouvertures et les orifices adéquats ainsi que le pourtour du joint.

Le fait de déposer l'élastomère après la mise en forme de l'âme limite les risques de détérioration du revêtement en élastomère.

En variante, la nervure 22 pourrait être remplacée par toute forme en relief prévue au niveau de l'âme permettant de réduire l'épaisseur de l'élément en matériau souple et d'augmenter le taux de compression lorsque le joint est mis en place. Cette forme en relief pourrait être obtenue par pliage et/ou découpe de l'âme ou par ajout d'une cale.

## Revendications

1. Joint d'étanchéité comprenant une tôle d'épaisseur I, revêtue sur au moins une surface d'un élément (24) en matériau souple, notamment en élastomère, ladite tôle comprenant une butée (20) d'épaisseur h supérieure à l et une barrière d'étanchéité (16) constituée dudit élément (24), ladite barrière d'étanchéité (16) est rapportée sur la surface de ladite tôle et sa hauteur est supérieure à celle de la butée (20), ladite tôle comprenant en outre une forme en relief (22) au niveau de la barrière d'étanchéité (16), ladite forme en relief (22) est recouverte de l'élément (24) en matériau souple qui s'étend au delà de ladite forme en relief (22) ledit joint d'étanchéité est **caractérisé en ce que** la forme en relief (22) a une hauteur inférieure à celle de la butée (20).

2. Joint d'étanchéité selon la revendication 1, **caractérisé en ce que** la forme en relief est la partie en saillie d'une nervure (22).

3. Joint d'étanchéité selon la revendication 1 ou 2, **caractérisé en ce qu'**il comprend des barrières d'étanchéité sur chacune de ses faces.

4. Joint d'étanchéité selon l'une quelconque des revendications précédentes, **caractérisé en ce que** l'épaisseur de l'élément (24) en matériau souple au droit de la forme en relief peut être variable,

5. Joint d'étanchéité selon l'une quelconque des revendications précédentes, **caractérisé en ce que** la différence de hauteur entre la forme en relief et le plan d'appui de la butée sera supérieure ou égale à environ 30% de l'épaisseur de l'élément (24) au droit de la forme en relief.

6. Joint d'étanchéité selon l'une quelconque des revendications précédentes, **caractérisé en ce que** la différence de hauteur entre l'élément (24) en matériau souple au droit de la forme en relief et le plan d'appui de la butée sera de l'ordre de 10 à 70% de l'épaisseur et de l'élément (24) au droit de la forme en relief.

## Claims

1. Seal comprising a metal sheet of thickness 1, coated on at least one surface with an element (24) made of flexible material, notably of elastomer, the said metal sheet comprising an abutment (20) with a thickness h greater than 1 and a sealing barrier (16) consisting of the said element (24), the said sealing barrier (16) is fitted to the surface of the said metal sheet and its height is greater than that of the abutment (20), the said metal sheet also comprising a raised shape (22) at the sealing barrier (16), the said raised shape (22) is covered with the element (24) made of flexible material which extends beyond the said raised shape (22), the said seal is **characterized in that** the raised shape (22) has a height that is less than that of the abutment (20).

2. Seal according to Claim 1, **characterized in that** the raised shape is the protruding portion of a rib (22).

3. Seal according to Claim 1 or 2, **characterized in that** it comprises sealing barriers on each of its faces.

4. Seal according to any one of the preceding claims, **characterized in that** the thickness of the element (24) made of flexible material in line with the raised shape may be variable.

5. Seal according to any one of the preceding claims, **characterized in that** the difference in height between the raised shape and the bearing plane of the abutment will be greater than or equal to approximately 30% of the thickness of the element (24) in line with the raised shape.

6. Seal according to any one of the preceding claims, **characterized in that** the difference in height between the element (24) made of flexible material in line with the raised shape and the bearing plane of the abutment will be of the order of 10 to 70% of the thickness of the element (24) in line with the raised shape.

## Patentansprüche

1. Dichtung umfassend ein Blech der Dicke 1, das auf mindestens einer Oberfläche mit einem Element (24) aus flexiblem Material, besonders aus Elastomer, beschichtet ist, wobei das Blech einen Anschlag (20) der Dicke h, die größer als 1 ist, und eine Dichtgrenze (16) umfasst, die aus dem Element (24) besteht und an der Oberfläche des Blechs angebracht ist und die höher als der Anschlag (20) ist, wobei das Blech auf der Höhe der Dichtgrenze (16) ferner eine erhabene Form (22) umfasst, die mit dem Element (24) aus flexiblem Material bedeckt ist, das sich über die erhabene Form (22) hinaus erstreckt, wobei die Dichtung **dadurch gekennzeichnet ist, dass** die Höhe der erhabenen Form (22) geringer als die des Anschlags (20) ist.

2. Dichtung nach Anspruch 1, **dadurch gekennzeichnet, dass** die erhabene Form der vorragende Teil einer Rippe (22) ist.

3. Dichtung nach Anspruch 1 oder 2, **dadurch gekennzeichnet, dass** sie auf jeder ihrer Flächen Dichtgrenzen umfasst.

4. Dichtung nach einem der vorhergehenden Ansprüche, **dadurch gekennzeichnet, dass** die Dicke des rechtwinklig zur erhabenen Form liegenden Elements (24) aus flexiblem Material variabel sein kann.

5. Dichtung nach einem der vorhergehenden Ansprüche, **dadurch gekennzeichnet, dass** der Höhenunterschied zwischen der erhabenen Form und der Stützebene des Anschlags größer oder gleich ungefähr 30% der Dicke des rechtwinklig zur erhabenen Form liegenden Elements (24) ist.

6. Dichtung nach einem der vorhergehenden Ansprüche, **dadurch gekennzeichnet, dass** der Höhenunterschied zwischen dem rechtwinklig zur erhabenen Form liegenden Element (24) aus flexiblem Material und der Stützebene des Anschlags ungefähr 10 bis 70% der Dicke d1 des rechtwinklig zur erhabenen Form liegenden Elements (24) ist.
